Europäisches Patentamt

European Patent Office

Office européen des brevets

(11) Veröffentlichungsnummer: **0 246 546 B1**

## EUROPÄISCHE PATENTSCHRIFT

(45) Veröffentlichungstag der Patentschrift: **29.05.91**

(51) Int. Cl.⁵: **H04M 19/00, H04B 1/58**

(21) Anmeldenummer: **87106878.9**

(22) Anmeldetag: **12.05.87**

(54) **Fernsprech-Teilnehmerschaltung.**

(30) Priorität: **23.05.86 AT 1380/86**

(43) Veröffentlichungstag der Anmeldung:
**25.11.87 Patentblatt 87/48**

(45) Bekanntmachung des Hinweises auf die
Patenterteilung:
**29.05.91 Patentblatt 91/22**

(84) Benannte Vertragsstaaten:
**AT BE CH DE FR GB IT LI LU NL SE**

(56) Entgegenhaltungen:
**EP-A- 0 152 178**
**GB-A- 1 257 878**
**US-A- 4 053 722**

(73) Patentinhaber: **Siemens Aktiengesellschaft**
**Österreich**
**Siemensstrasse 88 - 92**
**A-1210 Wien(AT)AT**

Patentinhaber: **Siemens Aktiengesellschaft**
**Wittelsbacherplatz 2**
**W-8000 München 2(DE)BE CH DE FR GB IT LI**
**LU NL SE**

(72) Erfinder: **Beck, Helmuth, Dipl.-Ing.**
**Ottogasse 22**
**A-3400 Klosterneuburg(AT)**
Erfinder: **Mally, Erik, Dipl.-Ing.**
**Grosse Neugasse 42**
**A-1040 Wien(AT)**

Rank Xerox (UK) Business Services

# EP 0 246 546 B1

## Beschreibung

Gegenstand der Erfindung ist eine Fernsprechteilnehmerschaltung einer Fernsprechanlage mit aktiven Schaltelementen mit kapazitiv komplexer Eingangsimpedanz, bei der das von der Anlage zum Teilnehmer zu sendende Signal von zwei im Gegentakt arbeitenden Operationsverstärkern verstärkt und über zwei aus einer Serienschaltung eines Kondensators und eines Widerstandes gebildete Koppelzweige in die über zwei Speisewiderstände mit Gleichstrom versorgte Teilnehmerschleife eingespeist wird, während das symmetrische Teilnehmersignal über zwei Zweige des zur Richtungstrennung der Signale beider Sprechrichtungen dienenden Kompensationsnetzwerkes einem Teilnehmerverstärker zugeführt wird.

Im Zuge der Bestrebungen, die Rückhörbezugsdämpfung beim Teilnehmer und damit die Übertragungsqualität zu verbessern, kommt den Bemühungen, die elektrische Anpassung der Teilnehmerschaltung an die Teilnehmer-Sprechstellen zu verbessern, eine erhöhte Bedeutung zu. In den herkömmlichen Telefonsystemen war hierfür ein Eingangswiderstand von 600 Ohm reell vorgesehen, der jedoch den Ansprüchen hoher Übertragungsqualität nicht gerecht wird.

Eine Fernsprechteilnehmerschaltung der obengenannten Art ist im US-Patent 4 053 722 beschrieben, bei der die Kompensation von störenden Beeinflussungen des Vierdrahtsendezweiges durch auf dem Vierdrahtempfangszweig ankommende Signale mit Hilfe eines gesonderten Operationsverstärkers, dessen einer Eingang von den Signalen auf dem Vierdrahtempfangszweig beaufschlagt wird und dessen Ausgangssignale einen Eingang des Teilnehmerverstärkers beaufschlagen, sowie mit Hilfe eines Ausgleichsnetzwerkes erzielt wird, das zwischen dem Ausgang des genannten Operationsverstärkers und einem Bezugsspannung führenden Schaltungspunkt angeschaltet ist.

Die Erfindung hat sich die Aufgabe gestellt, eine Fernsprechteilnehmerschaltung zu schaffen, die den angeführten Ansprüchen an die Anpassung der Teilnehmerschaltung entspricht und erzielt dies dadurch, daß die der Einspeisung des zu sendenden NF-Signales und zur Gleichstromabriegelung gegenüber den Operationsverstärkern dienenden Koppelzweige zusammen mit zwei Koppelwiderständen einerseits sowie mit zwei aus je einem RC-Glied bestehenden Kompensationsimpedanzen andererseits eine Kompensationsbrückenschaltung bilden, wobei das symmetrische Teilnehmersignal über die Koppelwiderstände dem Teilnehmerverstärker zugeführt ist.

Mit Hilfe dieser erfindungsgemäßen Schaltung läßt sich eine die qualitativ hochwertige Anpassung ermöglichende definierte kapazitiv komplexe Eingangsimpedanz der Teilnehmerschaltung erzielen, weil die Ausgestaltung der Schaltung in Form einer Brücke einen genauen Brückenabgleich ermöglicht. Hierbei wird auch ein hinreichend starker Speisegleichstrom ermöglicht, ohne daß eine unzumutbare hohe Speisespannung erforderlich wird, weil im Speise-Gleichstromkreis nur die Teilnehmer-Sprechstelle und die Speisewiderstände eingeschaltet sind.

Zur Erzielung gleicher Eingangs- und Nachbildimpedanz wird gemäß einer weiteren Ausgestaltung der Erfindung das Kompensationsnetzwerk durch Transformation der Impedanzen so umgeformt, daß seine dem Empfang des Teilnehmersignals dienenden Zweige rein ohmsche Widerstände enthalten, während seine der Kompensation dienenden Zweige durch eine einfache Serienschaltung jeweils eines Widerstandes und einer Kapazität gebildet sind.

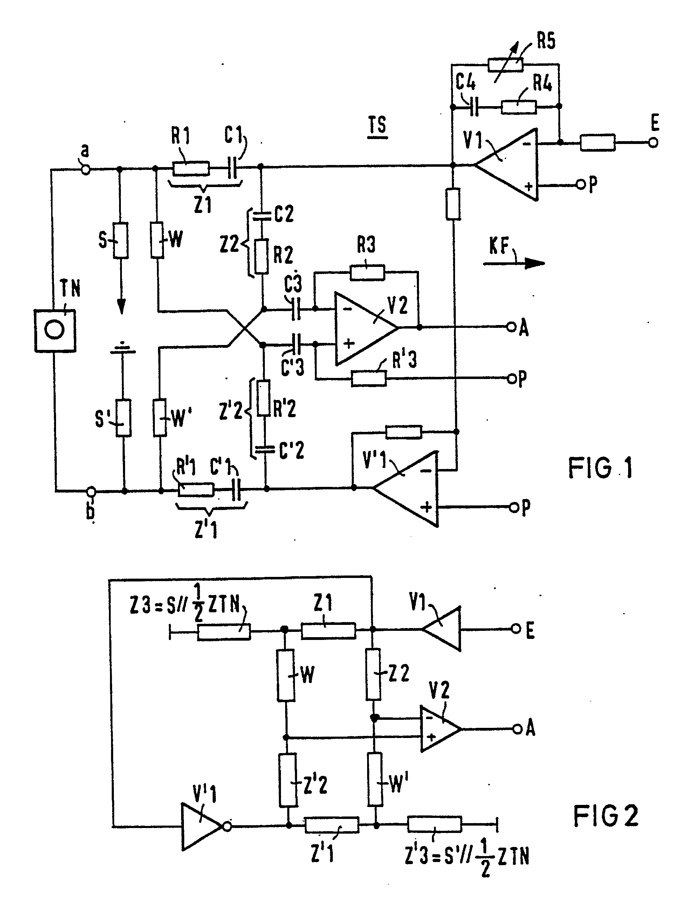

Ein Ausführungsbeispiel der Erfindung ist in FIG 1 der Zeichnung dargestellt,
FIG 2 zeigt eine vereinfachte Darstellung des Prinzips der Richtungstrennung.

Die der Teilnehmerstelle TN zugeordnete Teilnehmerschaltung TS ist mit der letzteren über die Sprechadern a, b verbunden. Die Verbindung zu dem in der Fernsprechanlage befindlichen Koppelfeld KF wird einerseits über den für die Signalübertragungsrichtung von der Anlage zum Teilnehmer TN dienenden Eingang E der Teilnehmerschaltung TS und andererseits in umgekehrter Richtung über den Ausgang A hergestellt.

Das über den Eingang E ankommende Signal wird durch den Operationsverstärker V1, der eine frequenzabhängige Gegenkopplung besitzt, verstärkt und von diesem und dem Operationsverstärker V'1 gegenphasig über die als Trennkondensatoren wirkenden Kondensatoren C1 bzw. C'1 sowie über die Längswiderstände R1 bzw. R'1 in die Teilnehmerschleife a, TN, b eingespeist. Die Gegenphasigkeit der Ausgangssignale der Operationsverstärker V1 und V'1 kommt dadurch zustande, daß der Operationsverstärker V'1 über seinen invertierenden Eingang (-) vom Ausgangssignal des Operationsverstärkers V1 gespeist wird. In Fig. 2 ist dieser Umstand durch die Darstellung von V'1 als Umkehrglied symbolisiert.

Die Teilnehmerstation TN ist aus der Teilnehmerschaltung TS von der Betriebsgleichspannung über die Speisewiderstände S und S' gespeist. Die Signale der Teilnehmerstation TN gelangen über die Sprechadern a, b und über zwei ohmsche Koppelwiderstände W und W' an die Eingänge eines dritten, als Teilnehmerverstärker bezeichneten Operationsverstärkers V2, dessen Ausgangssignal über den Ausgang A dem Koppelfeld KF zugeführt wird. Mit P sind drei Anschlüsse der Schaltung bezeichnet, die betriebsmäßig

2

ein festes Referenzpotential führen. Zwei dieser Anschlüsse P sind mit den nichtinvertierenden Eingängen der Operationsverstärker V1 und V'1 verbunden, während der dritte der Festlegung des Eingangspotentiales des Teilnehmerverstärkers V2 dient. Die Verstärkung des Teilnehmerverstärkers V2 ist bestimmt durch das Verhältnis der Widerstandswerte seines Gegenkopplungswiderstandes R3 bzw. seines das Potential zum nichtinvertierenden Eingang ( + ) übertragenden Widerstandes R'3 zu den Koppelwiderständen W bzw. W'.

Bei einer Schaltung, die nur mit den bisher angeführten Schaltungselementen ausgestattet wäre, würde ohne eine weitere Maßnahme eine Beeinflussung des vom Teilnehmerverstärker V2 gelieferten Ausgangssignales durch das von den Operationsverstärkern V1 und V'1 eingespeiste Signal über die Koppelwiderstände W und W' stattfinden.

Zur Kompensation solcher störender Einflüsse sind daher zwei Kompensationsimpedanzen Z2, Z'2 vorgesehen, die im einzelnen aus je einem RC-Glied Rs, C2 bzw. R'2, C'2 bestehen. Die Funktion der Kompensationsschaltung wird anhand von Fig. 2 erläutert; Die Impedanz Z3 (Z'3) ergibt sich aus der Parallelschaltung des Speisewiderstandes S (S') zum halben Wert der nachbildenden Impedanz ZTN (Teilnehmerimpedanz).

Die vom Verstärker V1 (V'1) gelieferte Spannung wird durch die Serienschaltung von Z1 (Z'1) mit Z3 (Z'3) geteilt, wobei der Widerstand W (W') eine vernachlässigbare Belastung darstellt. Zwischen dieser Teilspannung und dem Ausgang des zum ersten Verstärker inversen Verstärkers V'1 (V1) liegt ein weiterer Spannungsteiler W/Z'2 (W'/Z2), der so bemessen ist, daß sich an seinem Teilungspunkt, der mit einem Eingang des Teilnehmerverstärkers V2 verbunden ist, die Spannung Null ergibt. Damit ist auch die Differenzspannung zwischen den beiden Eingängen von V2 Null, was einer Kompensation der über den Eingang E eingespeisten Spannung entspricht.

Die Kondensatoren C3 bzw. C'3 in Fig. 1, dienen lediglich der galvanischen Trennung und haben keinen Einfluß auf die Kompensation.

Bezüglich der Bemessung aller Widerstände bzw. Impedanzen ist zunächst davon auszugehen, daß die Brückenzweige (W, W', Z2, Z'2) wesentlich hochohmiger sind als die Koppelzweige Z1, Z'1 und daher die Eingangsimpedanz der Teilnehmerschaltung TS in Bezug auf den Sprechwechselstrom von der Teilnehmerstelle TN wenig beeinflussen. Für diesen Sprechwechselstrom stellt die Speisestromquelle, an die die Speisewiderstände S, S' angeschlossen sind, praktisch einen Kurzschluß dar. Ebenso liegen die Ausgänge der Operationsverstärker V1, V'1 in Bezug auf diesen Sprechwechselstrom praktisch auf Nullpotential, so daß die Eingangsimpedanz der Teilnehmerschaltung in guter Näherung durch die Serienschaltung der Speisewiderstände S, S' und durch die dazu parallele Serienschaltung der Impedanzen Z1 und Z'1 gebildet wird.

Abschließend ist noch zu erwähnen, daß die Verstärkung der Schaltung in Richtung zum Teilnehmer TN durch Festlegung des Widerstandes R6, die Verstärkung der Gegenrichtung durch die Widerstände R3, R'3 eingestellt werden kann.

Im einzelnen hat sich für die erfindungsgemäße Schaltung die folgende Dimensionierung bewährt:

| Widerstände | S, S' | 520 Ohm |
| | R1, R'1 | 140,2 Ohm |
| | W, W' | 52,3 Kiloohm |
| | R2, R'2 | 132 " |
| | R3, R'3 | 43,2 " |
| | R4 | 96,5 " |
| | R5 | 2,2 Megohm |
| Kapazitäten | C1, C'1 | 150 Nanofarad |
| | C3, C'3 | 220 " |
| | C4 | 1 " |
| | C2, C'2 | 750 Picofarad |

3

# EP 0 246 546 B1

## Ansprüche

1. Fernsprechteilnehmerschaltung einer Fernsprechanlage mit aktiven Schaltelementen mit kapazitiv komplexer Eingangsimpedanz, bei der das von der Anlage zum Teilnehmer zu sendende Signal von zwei im Gegentakt arbeitenden Operationsverstärkern verstärkt und über zwei aus einer Serienschaltung eines Kondensators und eines Widerstandes gebildete Koppelzweige in die über zwei Speisewiderstände mit Gleichstrom versorgten Teilnehmerschleife eingespeist wird, während das symmetrische Teilnehmersignal über zwei Zweige des zur Richtungstrennung der Signale beider Sprechrichtungen dienenden Kompensationsnetzwerkes einem Teilnehmerverstärker zugeführt wird,
   **dadurch gekennzeichnet,**
   daß die der Einspeisung des zu sendenden NF-Signales und zur Gleichstromabriegelung gegenüber den Operationsverstärkern (V1, V'1) dienenden Koppelzweige (R1,C1 bzw. Z1; R'1, C'1 bzw. Z'1) zusammen mit zwei Koppelwiderständen (W, W') einerseits sowie mit zwei aus je einem RC-Glied (R2, C2; R'2, C'2) bestehenden Kompensationsimpedanzen (Z2, Z'2) andererseits eine Kompensationsbrückenschaltung bilden, wobei das symmetrische Teilnehmersignal über die Koppelwiderstände (W, W') dem Teilnehmerverstärker (V2) zugeführt ist.

2. Schaltung nach Anspruch 1,
   **dadurch gekennzeichnet,**
   daß bei vorausgesetzter gleicher Eingangs- und Nachbildimpedanz das Kompensationsnetzwerk durch Transformation der Impedanzen so umgeformt ist, daß seine dem Empfang des Teilnehmersignals dienende Zweige (W, W') rein ohmsche Widerstände enthalten, während seine der Kompensation dienenden Zweige (Z2, Z'2) durch eine einfache Serienschaltung jeweils eines Widerstandes und einer Kapazität (R2, Z2; R'2, Z'2) gebildet sind.

## Claims

1. Telephone subscriber circuit of a telephone exchange comprising active switching elements with capacitive complex input impedance, in which the signal to be transmitted from the exchange to the subscriber is amplified by two operational amplifiers operating in push-pull and is fed into the subscriber loop, supplied with direct current via two feed resistors, via two coupling branches formed by a series connection of a capacitor and of a resistor whilst the balanced subscriber signal is supplied to a subscriber line amplifier via two branches of the compensation network used for separating the direction of the signals of both speech directions, characterized in that the coupling branches (R1,C1 and Z1; R'I, C'1 and Z'1), used for feeding-in the AF signal to be transmitted and for direct-current isolation from the operational amplifiers (V1, V'1), together with two coupling resistors (W, W'), on the one hand, and with two compensation impedances (Z2, Z'2) consisting of one RC section each (R2, C2; R'2, C'2), on the other hand, form a compensation bridge circuit. the balanced subscriber signal being supplied to the subscriber line amplifier (V2) via the coupling resistors (W, W').

2. Circuit according to Claim 1, characterized in that, assuming identical input and balancing impedance, the compensation network is transformed by transformation of the impedances in such a manner that its branches (W, W') used for receiving the subscriber signal contain purely ohmic resistors whilst its branches (Z2, Z'2) used for the compensation are formed by a simple series circuit of in each case one resistor and capacitor (R2,Z2; R'2, Z'2).

## Revendications

1. Circuit d'abonné téléphonique d'une installation téléphonique comportant des éléments de circuit actifs possédant une impédance capacitive complexe d'entrée, et dans lequel le signal devant être émis par l'installation en direction de l'abonné est amplifié par deux amplificateurs opérationnels fonctionnant en mode push pull et envoyé, par l'intermédiaire de deux branches de couplage formées par un circuit série constitué par un condensateur et une résistance, dans la boucle d'abonné alimentée en courant continu au moyen de deux résistances d'alimentation, tandis que le signal symétrique d'abonné est envoyé à un amplificateur de l'abonné, par l'intermédiaire de deux branches du réseau de compensation utilisé pour séparer les directions des signaux des deux sens de transmission téléphonique,

4

caractérisé par le fait
que les branches de couplage (R1, C1 ou Z1; R'1, C'1 ou Z'1), utilisées pour l'alimentation du signal à basse fréquence devant être émis et le verrouillage en courant continu par rapport aux amplificateurs opérationnels (V1,V'1) forment, conjointement avec deux résistances de couplage (W, W') d'une part ainsi qu'avec deux impédances de compensation (Z2,Z'2), constituées chacune par un circuit RC (R2,C2; R'2, C'2), d'autre part, un circuit en pont de compensation, le signal symétrique d'abonné étant envoyé à l'amplificateur (V2) de l'abonné par l'intermédiaire des résistances de couplage (W,W').

2. Circuit selon la revendication 1, caractérisé par le fait que, dans le cas où l'impédance d'entrée et l'impédance de simulation sont supposées identiques, le réseau de compensation est converti par transformation des impédances de telle sorte que ses branches (W,W') utilisées pour la réception du signal d'abonné contiennent des résistances purement ohmiques, tandis que ses branches (Z2, Z'2) utilisées pour la compensation sont formées par un simple circuit série constitué respectivement d'une résistance et d'une capacité (R2,Z2; R'2,Z'2).

FIG.1

FIG 2

6